(19) Europäisches Patentamt
European Patent Office
Office européen des brevets

(11) **EP 2 928 721 B1**

(12) **FASCICULE DE BREVET EUROPEEN**

(45) Date de publication et mention de la délivrance du brevet:
**21.02.2018 Bulletin 2018/08**

(21) Numéro de dépôt: **13808151.8**

(22) Date de dépôt: **03.12.2013**

(51) Int Cl.:
***B60L 3/12*** *(2006.01)*     ***B60L 11/18*** *(2006.01)*
***G06Q 50/06*** *(2012.01)*

(86) Numéro de dépôt international:
**PCT/FR2013/052924**

(87) Numéro de publication internationale:
**WO 2014/087092 (12.06.2014 Gazette 2014/24)**

(54) **PROCÉDÉ DE GESTION DISTRIBUÉE DE LA CHARGE DE BATTERIES DE TRACTION DE VÉHICULES ÉLECTRIQUES**

VERFAHREN ZUR VERTEILTEN VERWALTUNG DES LADEVORGANGS VON TRAKTIONSBATTERIEN VON ELEKTROFAHRZEUGEN

METHOD OF DISTRIBUTED MANAGEMENT OF THE CHARGING OF TRACTION BATTERIES OF ELECTRIC VEHICLES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **04.12.2012 FR 1261601**

(43) Date de publication de la demande:
**14.10.2015 Bulletin 2015/42**

(73) Titulaires:
- **Renault S.A.S.**
  **92100 Boulogne-Billancourt (FR)**
- **Centre National de la Recherche Scientifique (C.N.R.S.)**
  **75016 Paris (FR)**

(72) Inventeurs:
- **BEAUDE, Olivier**
  **F-92600 Asnières-sur-Seine (FR)**
- **SAHELI, Mehdi**
  **F-75015 Paris (FR)**
- **HENNEBEL, Martin**
  **91190 GIF-SUR-IVETTE (FR)**
- **LASAULCE, Samson**
  **54000 NANCY (FR)**

(74) Mandataire: **Gendron, Vincent Christian et al**
**Fédit-Loriot**
**38, avenue Hoche**
**75008 Paris (FR)**

(56) Documents cités:
**US-A1- 2008 052 145**     **US-A1- 2012 112 698**

**Description**

La présente invention concerne de façon générale les procédés de gestion de charge de batteries de traction de véhicules électriques ou hybrides, en particulier de véhicules automobiles, qui sont destinées à être connectées, au cours d'une étape de charge, à un même réseau local de distribution d'énergie électrique.

L'insertion, pour leur recharge, de batteries de traction de véhicules électriques ou hybrides au sein d'un même réseau local de distribution d'énergie électrique, qu'elles soient embarquées dans les véhicules ou stationnaires en seconde vie, va inévitablement venir modifier le profil de consommation électrique global observé au niveau du réseau local et ce, dans des proportions significatives au vu de la puissance requise pour la charge de telles batteries. Les batteries considérées dans le cadre de la présente demande sont rattachées à un même « quartier », défini ici par la topologie du réseau local de distribution d'électricité ou, de manière plus générale, il s'agit de considérer qu'elles appartiennent à un même ensemble de batteries, qui ont une influence sur un même équipement, typiquement un transformateur, d'un réseau local de distribution d'électricité, sans nécessairement qu'il y ait un lien géographique direct entre elles.

Dans ce contexte, les préoccupations liées à l'augmentation globale des consommations électriques sur les réseaux, renforcée par l'insertion des batteries de traction pour leur recharge, et la saturation des réseaux qui peut en découler, conduisent à s'orienter vers des solutions de charge intelligentes, capables de prendre en compte les contraintes du réseau électrique et qui impliquent une interaction plus forte entre gestionnaires du réseau et usagers.

Actuellement, des solutions de charge intelligente des batteries de traction de véhicules électriques susceptibles de prendre en compte les contraintes du réseau de distribution d'énergie électrique sont connues, au moins à titre expérimental. Ces solutions impliquent toutefois très majoritairement une délégation du pilotage de la charge des batteries à un acteur extérieur, distinct de l'usager de la batterie et destiné à jouer un rôle de planificateur central au niveau du réseau. En particulier, de telles solutions nécessitent que les usagers délivrent des informations personnelles concernant les consommations électriques et l'usage du véhicule électrique (heure de départ, niveaux de charge courant et désiré de la batterie) à ce planificateur. Le planificateur, a priori un énergéticien, a alors pour mission de collecter l'ensemble de ces données personnelles propres à chaque usager et d'optimiser ensuite, en ayant connaissance de l'ensemble de ces données personnelles, les objectifs en termes de coûts propres à chaque usager ou de coûts induits sur le réseau de distribution d'énergie électrique. Pour ce faire, il est apte à prendre le contrôle à distance sur la charge des batteries, dans l'ensemble de batteries considéré.

Une telle approche est donc à la fois centralisée et monodirectionnelle, dans la mesure où la gestion de la charge repose uniquement sur un contrôle qui va d'un planificateur central, gestionnaire du réseau de distribution ou fournisseur d'électricité, vers les usagers. Cette approche découle notamment de principes déjà connus de gestion intelligente des consommations électriques dans le cadre de la gestion des contraintes des réseaux d'électricité, décrits par exemple dans le document de brevet WO2010033038.

Selon ce document, des consommateurs électriques envoient la planification prévue de leurs usages électriques, tandis qu'un coordinateur centralisé, prévu pour coordonner les consommations de façon à réguler la fréquence et la tension sur le réseau, impose un retard variable dans le temps à chacun des usages prévus en fonction de contraintes côté réseau (par exemple maintien de la fréquence et de la tension), avant de fournir l'énergie électrique nécessaire. Dans ce cadre, c'est bien un gestionnaire central qui décide des temps d'attente à imposer à chaque consommateur, lesquels ne sont pas maître de ces choix et sont également contraints de fournir des informations personnelles quant à leurs usages électriques, ce qui n'est pas souhaitable.

Le document de brevet WO2010132490 propose quant à lui une méthode de contrôle de le charge de batteries de véhicules électriques, dans laquelle les usagers reçoivent des informations de prix pour accéder à l'énergie électrique fournie par le réseau de distribution d'énergie électrique, de façon à pouvoir charger la batterie à des moments qui s'accordent aux contraintes du réseau d'électricité en utilisant ces informations de prix. Toutefois, cette solution est loin d'être optimale, dans la mesure où il n'y a aucune prise en compte de la dynamique de décision des usagers. Autrement dit, si une plage horaire présente un prix plus bas, tous les usagers peuvent la choisir, ce qui aura un impact négatif du point de vue du réseau, en termes de coûts induits sur celui-ci, en particulier liés au vieillissement des transformateurs et/ou aux pertes par effet Joule.

Le document US 2008/052145 divulgue un procédé de gestion de charge d'un ensemble de batteries de traction de véhicules électriques selon le préambule de la revendication 1.

Dans ce contexte, la présente invention a pour but de proposer un procédé de gestion distribuée de la charge d'un ensemble de batteries rattachées à un même réseau local de distribution d'énergie électrique, exempt de l'une au moins des limitations précédemment évoquées. En particulier, un but de l'invention est de proposer un procédé, qui permette d'obtenir des gains significatifs concernant les objectifs d'optimisation des coûts liés à la charge, propres d'une part, aux usagers et, d'autre part, au réseau de distribution d'énergie électrique, tout en laissant le pilotage de la charge aux usagers, en leur évitant ainsi de communiquer des données personnelles.

A cette fin, l'invention concerne un procédé de gestion de charge d'un ensemble de batteries de traction de véhicules électriques, dans lequel chaque batterie dudit ensemble de batteries est prévue pour être chargée isolément, dans une étape de charge, au travers d'un même réseau local de distribution d'énergie électrique auquel elle est connectée. Selon l'invention, le procédé comprend une étape de coordination de la charge dudit ensemble de batteries dans laquelle on fournit un automate de gestion de charge de batterie associé à chaque batterie dudit ensemble, apte à établir une communication bidirectionnelle avec un gestionnaire de batteries implémenté au niveau dudit réseau local, et dans laquelle, avant le début effectif de ladite étape de charge, on détermine, pour chaque batterie à charger, à l'aide dudit automate de gestion de charge associé à ladite batterie, un profil de charge optimal, en tenant compte d'un signal de consommation électrique fourni audit automate par ledit gestionnaire de batterie, apte à indiquer un profil de consommation électrique globale envisagée sur ledit réseau local résultant de choix individuels de profil de charge propres à chaque batterie émis itérativement par chaque automate respectif à destination dudit gestionnaire.

Grâce à cet agencement, le procédé de l'invention permet de coordonner la charge au niveau d'un ensemble de batteries de véhicules électriques, en utilisant un signal bien défini, en l'occurrence le profil de consommation électrique globale envisagé au niveau du réseau local, faisant en sorte que le choix individuel d'un profil de charge effectué par un usager en particulier, via l'automate associé à la batterie, dépende, indirectement, de celui qui est effectué pour l'ensemble des batteries rattachées au même réseau local. Ainsi, chaque usager est à même de faire son choix individuellement, en particulier, pour minimiser les coûts liés à la recharge de sa batterie, tout en intégrant avantageusement les coûts induits sur le réseau dans sa décision, grâce aux signaux de consommation électrique reçus, établis en tenant compte de l'ensemble des profils de charge prévus par les autres usagers, qui incitent les usagers à harmoniser de façon coordonnée leur profil de charge prévue au bénéfice du réseau, en particulier s'agissant des enjeux de vieillissement des transformateurs et/ou de pertes Joules.

Egalement, le procédé de l'invention permet de laisser chaque usager maître de son choix, puisque c'est l'automate associé à la batterie qui, au final, décide du profil de charge optimal. De plus, le procédé de l'invention permet avantageusement de garantir une protection des informations personnelles propres à chaque usager. En effet, il est seulement besoin d'envoyer au gestionnaire, via l'automate, un choix de profil de charge, pour coordonner la charge au niveau de l'ensemble de batteries. Le signal de consommation électrique émis depuis le gestionnaire vers chaque automate de gestion de charge, nécessaire à la prise de décision par ce dernier, étant établi sur la base de l'ensemble des choix individuels de profil de charge, le procédé de l'invention garantir une meilleure protection des données personnelles des usagers que les méthodes proposée dans les documents de brevet discutés plus haut.

Selon d'autres caractéristiques avantageuses du procédé conforme à l'invention, prises isolément ou en combinaison :

- côté dudit gestionnaire, on reçoit lesdits choix individuels de profil de charge propres à chaque batterie via ledit automate de gestion de charge de batterie associé à chaque batterie, on effectue une agrégation desdits choix individuels de profils de charge reçus, de manière à générer ledit profil de consommation électrique globale envisagée sur ledit réseau local, considéré sur un intervalle temporel englobant lesdits choix individuels de profils de charge, et on transmet ledit signal de consommation électrique indiquant ledit profil de consommation électrique globale envisagée sur ledit réseau local à chacun desdits automates de gestion de charge de batterie ;
- côté automate de gestion de charge associé à chaque batterie, ladite étape de coordination comprend dans l'ordre les sous-étapes suivantes :

   a) on détermine pour chaque batterie à charger, à l'aide de l'automate de gestion de charge associé à ladite batterie, un choix individuel de profil de charge de ladite batterie,
   b) on transmet depuis chaque automate, lesdits choix individuels de profils de charge ainsi déterminés vers ledit gestionnaire,
   c) on reçoit, au niveau de chaque automate, ledit profil de consommation électrique globale envisagée sur ledit réseau local, généré par ledit gestionnaire,
   d) on revient de manière itérative à la sous-étape a) pour mettre à jour ledit choix individuel de profil de charge en tenant compte dudit profil de consommation électrique globale reçu, jusqu'à ce qu'on détermine ledit profil de charge optimal pour toutes les batteries à charger, simultanément ;

- ledit choix individuel de profil de charge comprend au moins une plage horaire de charge souhaitée et à l'étape d), ladite mise à jour consiste à décaler ladite plage horaire de charge souhaitée pour obtenir une plage horaire de charge optimale, qui minimise une fonction de coût appliquée audit profil de consommation électrique globale envisagée ;
- ladite fonction de coût repose sur une combinaison de tarifs d'achat de l'énergie électrique, de coûts liés à l'utilisation de la batterie et de coûts de fonctionnement dudit réseau local découlant de la charge des batteries ;
- les coûts de fonctionnement dudit réseau local sont établis sur la base d'une estimation des pertes Joule sur ledit réseau et d'un modèle d'estimation du vieillissement d'un même transformateur dudit réseau local auquel lesdites batteries sont rattachées lors de l'étape de charge ;

- on fournit audit gestionnaire un profil de consommation électrique sur ledit réseau local hors charge desdites batteries, considéré sur ledit intervalle temporel, afin d'établir ledit profil de consommation électrique globale envisagée sur ledit réseau local de distribution d'énergie électrique en effectuant une sommation dudit profil de consommation électrique hors charge et de ladite agrégation desdits choix individuels de profil de charge ;
- ledit signal de consommation électrique généré par ledit gestionnaire comprend une évaluation du prix correspondant à la charge propre à chaque batterie à charger calculée sur la base dudit profil de consommation électrique globale envisagée sur ledit réseau local et à l'étape d), ladite mise à jour consiste à procéder à la détermination dudit profil de charge optimal par apprentissage en fonction de ladite évaluation de prix reçue ;
- ledit signal de consommation électrique est transmis par ledit gestionnaire à destination desdits automates selon un pas de temps fixé ;
- ledit signal de consommation électrique est transmis par ledit gestionnaire à destination desdits automates dès réception par ledit gestionnaire d'un nouveau choix individuel de profil de charge par un automate ;
- ledit choix individuel de profil de charge pour une batterie est déterminé à l'aide de l'automate de gestion de charge associé à ladite batterie, sur la base de contraintes de charge spécifiées par un usager de ladite batterie, incluant au moins un instant de début d'utilisation souhaité de ladite batterie et un état de charge souhaité de ladite batterie audit instant de début d'utilisation ;
- ledit choix individuel de profil de charge pour une batterie est déterminé à l'aide de l'automate de gestion de charge associé à ladite batterie en tenant compte à la fois d'un prix d'achat de l'énergie électrique, de coûts liés à l'utilisation de la batterie et de signaux d'incitation tarifaires fournis par un organe de gestion dudit réseau local de distribution d'énergie électrique ;
- on contrôle à distance l'activation de ladite étape de charge suivant ledit profil de charge optimal préalablement déterminé au cours de ladite étape de coordination de charge ;
- ladite communication bidirectionnelle est établie par l'intermédiaire d'une liaison utilisant ledit réseau de distribution d'énergie électrique ou un réseau de communication filaire associé ou non audit réseau.
- ladite communication bidirectionnelle est établie par une liaison sans fil;
- on conserve, côté gestionnaire, un historique des signaux de consommation électrique initiaux transmis respectivement lors de chaque étape de coordination de charge et des gains de coût de fonctionnement dudit réseau obtenus au terme de chaque étape de coordination de charge, de manière que ledit gestionnaire détermine par apprentissage à partir dudit historique le signal de consommation électrique initial propre à maximiser lesdits gains ;
- on conserve, côté automate de gestion de charge associé à chaque batterie, un historique des choix individuels initiaux de profils de charge émis respectivement lors de chaque étape de coordination de charge et du coût lié à la charge résultant de chaque étape de coordination de charge, de manière que chaque automate détermine par apprentissage à partir dudit historique le choix individuel de profil de charge initial propre à minimiser ledit coût.

D'autres caractéristiques et avantages de l'invention ressortiront clairement de la description qui en est faite ci-après, à titre indicatif et nullement limitatif, en référence aux dessins annexés, dans lesquels:

- la Figure 1 est un schéma d'ensemble des principales interactions entre un gestionnaire de batteries implémenté au niveau d'un réseau local de distribution d'énergie électrique et des automates liés à des batteries de traction de véhicules électriques rattachées à ce même réseau pour leur recharge ;
- La figure 2 est un schéma synoptique de l'utilisation du profil de consommation électrique globale envisagée au niveau du réseau local selon un algorithme distribué de coordination de charge pour la mise en oeuvre du procédé conforme à la présente invention.

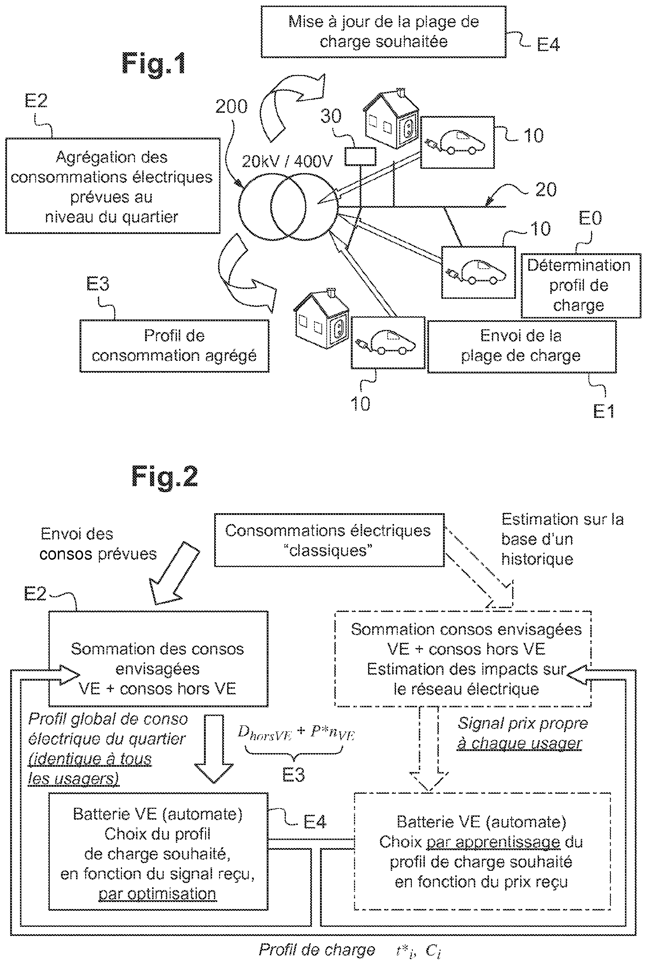

La figure 1 illustre schématiquement un ensemble de batteries 10 de traction de véhicule électrique (VE) (on entend ici des batteries qu'elles soient embarquées dans les véhicules ou stationnaires en seconde vie), rattachées à un même « quartier », c'est-à-dire qui sont prévues pour être connectées, lors d'une étape de charge de celles-ci, au niveau d'un même réseau local 20 de distribution d'énergie électrique, autrement dit, qui ont une influence sur les mêmes équipements de ce réseau lors de leur charge, en l'occurrence un transformateur local 200, par exemple un transformateur moyenne tension/basse tension (20kV/400V en France), ou encore un transformateur haute tension/moyenne tension (63kV/20kV en France). Aussi, dans le cadre de la présente demande, un réseau local est défini par la partie de réseau de distribution d'énergie électrique déployée en aval d'un même transformateur moyenne tension/basse tension. Un gestionnaire 30 de batteries, connecté au réseau local 20 en aval du transformateur 200, est prévu pour gérer cet ensemble de batteries 10, dans le cadre d'une gestion de la charge des batteries 10 s'appuyant, conformément à l'invention, sur une coordination distribuée de la charge, selon des principes qui seront détaillés ci-après.

Principalement, au lieu de lancer l'étape de charge d'une batterie 10 dès le moment où elle est connectée au réseau local 20, une étape de coordination des batteries 10 devant être chargées intervient avant le début effectif de la charge. Cette étape de coordination selon l'invention peut ainsi être qualifiée d'étape « off-line », selon une terminologie anglo-saxonne, dans la mesure où elle vise à coordonner l'action, en l'occurrence la recharge des batteries avant que celle-ci ait débuté, par opposition au cas que l'on peut qualifier « on-line », où la coordination et l'action sont simultanées. L'étape de coordination de l'invention vise préférentiellement à obtenir, comme il sera vu plus en détail par la suite, un positionnement optimal d'une plage horaire de recharge respective des batteries, apte à réaliser des gains du point de vue de l'usager de la batterie, en particulier par l'intermédiaire d'un tarif variable en fonction de son comportement de consommation, mais aussi pour le réseau local qui, indirectement, bénéficiera de la charge coordonnée grâce à une minimisation des couts induits sur le réseau.

Cette étape de coordination repose sur une communication bidirectionnelle établie entre des automates de gestion de charge de batterie associés à chaque batterie 10, implémentés par exemple au niveau de chaque véhicule électrique, et le gestionnaire 30 de batteries 10. En effet, l'étape de coordination de charge implique, comme on le verra plus en détail par la suite, l'envoi de signaux des usagers, via les automates de gestion de charge associés à chaque batterie, au gestionnaire 30, les automates réagissant eux-mêmes à des signaux envoyés par le gestionnaire 30.

La communication entre les automates liés aux batteries et le gestionnaire 30 pourra avantageusement être établie par l'intermédiaire d'une liaison utilisant le réseau local 20 de distribution d'énergie électrique, typiquement par une liaison CPL (Courant Porteur en Ligne), ou plus généralement en utilisant un réseau de communication filaire associé ou non au réseau local 20, ou encore par l'intermédiaire d'une liaison sans fil, par exemple une liaison de type Wifi, Zigbee ou Bluetooth.

Plus précisément, dans une étape E1, les signaux transmis par les automates associés aux batteries 10 comprennent un choix individuel de profil de charge contenant une information de plage horaire de charge souhaitée (début et fin de charge), ainsi que la puissance de charge requise. Pour ce faire, dans une étape E0 mise en oeuvre avant le début effectif de l'étape de charge proprement dite, et pour chaque batterie à charger, les automates de gestion de charge associés sont conçus pour déterminer, dans un premier temps, un choix de profil de charge de la batterie, comprenant notamment la plage horaire de charge souhaitée. Le choix de cette plage horaire de charge est ainsi effectué de manière automatique, grâce aux automates, qui sont préférentiellement conçus pour effectuer ces choix en intégrant des contraintes de charge spécifiées par les usagers, qui peuvent avantageusement inclure un instant de début d'utilisation souhaitée de la batterie, soit une heure de départ souhaitée avec le véhicule, et un état de charge souhaité de la batterie à cet instant. Le choix par l'automate de la plage horaire de charge souhaitée en intégrant ces contraintes de charge, pourra avantageusement reposer à la fois sur le prix d'achat de l'électricité, mais aussi, sur des signaux d'incitation, de préférence tarifaires, fournis par un organe de gestion du réseau de distribution d'énergie électrique, qui peut être le gestionnaire 30, en fonction des coûts du réseau (pertes Joule, vieillissement du transformateur par exemple.

Le gestionnaire 30 est alors conçu pour collecter et agréger, via la liaison bidirectionnelle établie avec les automates associés aux batteries 10, l'ensemble des choix individuels de profils de charge ainsi déterminés et donc l'ensemble des plages horaires de charge souhaitées et d'en déduire un signal de consommation électrique apte à indiquer un profil de consommation électrique globale envisagée sur ledit réseau local (20) résultant de ces choix individuels de profil de charge, destiné à être transmis par le gestionnaire 30 aux automates. Ainsi, après réception des choix individuels de profils de charge de batterie ainsi déterminés, le gestionnaire 30 est conçu pour générer, dans une étape d'agrégation E2, le signal de consommation électrique, défini sur la base d'une sommation, éventuellement pondérée, des consommations électriques envisagées au niveau du réseau local de distribution d'énergie électrique, telles qu'elles résultent des choix individuels de profils de charge reçus. Ce signal de consommation électrique fourni par le gestionnaire 30 aux automates est utilisé par ces derniers en tant que signal de décision pour optimiser leur choix de profil de charge, de manière à permettre une coordination efficace de la charge des batteries connectées au réseau.

Préférentiellement, comme l'illustre plus précisément la figure 2, le gestionnaire 30 effectue à l'étape E2 une sommation, éventuellement pondérée, des consommations électriques envisagées liées à la charge des batteries et des consommations électriques sur le réseau hors charge des batteries (consommations électriques « classiques »), de manière à générer le profil de consommation électrique globale envisagée sur le réseau local de distribution d'énergie électrique, considéré sur un intervalle temporel englobant les plages horaires de charge souhaitées. On suppose pour ce faire que le profil de consommation électrique envisagée sur le réseau hors charge des batteries est connu du gestionnaire 30. En variante, dans l'hypothèse où ce profil n'est pas connu, le gestionnaire 30 peut utiliser une estimation de ce profil sur la base d'un historique des réalisations des consommations électriques sur le réseau hors charge des batteries en fonction du temps.

Ce profil de consommation électrique globale correspond ainsi à une évaluation d'un profil de puissance ou de courant au niveau du transformateur 200 et ce, sur l'ensemble de l'intervalle temporel considéré. Il correspond ainsi à une évaluation de l'évolution temporelle de la consommation électrique globale sur le réseau sur l'intervalle temporel considéré, se traduisant par la relation mathématique suivante : $D(t) = D_{horsVE}(t) + P^* n_{VE}(t)$.

où

$$n_{VE}(t) = \sum_{VE\,i} n_{VE\,i}(t)$$

avec :

D(t) : demande d'énergie électrique globale sur le réseau ;

$D_{hors\,VE}(t)$ : demande d'énergie électrique sur le réseau hors charge des batteries au temps t (puissance électrique) ;

P : puissance de charge des batteries, supposée ici identique pour tous les usagers ;

$n_{VE}(t)$ : nombre de batteries qui sont en charge à l'instant t, résultant du choix des différents usagers ;

$n_{VE\,i}(t)$ : variable qui indique si la batterie i charge à l'instant t. Elle vaut un si la batterie i est en train de charger à l'instant t et zéro sinon.

Le signal de consommation électrique D(t) ainsi généré est transmis, dans une étape E3, depuis le gestionnaire 30 à l'ensemble des automates associés aux batteries 10. On notera ici que cette étape d'envoi E3 repose sur une diffusion à tous les usagers de la même information, dans la mesure où le signal de consommation électrique envoyé par le gestionnaire 30 est identique pour tous les usagers (profil de courant ou de puissance prévu au niveau du transformateur du réseau local sur l'ensemble de l'intervalle temporel considéré). Cela limite avantageusement les coûts d'échange de signaux entre le gestionnaire et les automates et la complexité du signal envoyé à tous les automates est indépendante du nombre de batteries concernées. Le procédé de gestion de charge de l'invention est donc facilement « transposable à l'échelle », c'est-à-dire qu'il pourra être adapté à un nombre de batteries à charger croissant sans faire augmenter les coûts de signalisation, de trafic d'information.

Puis, dans une étape E4, les automates associés aux batteries 10 sont conçus pour remettre itérativement à jour leur choix individuel de profil de charge, en fonction du signal de consommation électrique reçu, jusqu'à pouvoir déterminer des profils de charge qui soient optimaux pour toutes les batteries à charger simultanément. En particulier, à chaque réception d'un signal de consommation électrique fourni par le gestionnaire 30, les automates de gestion de charge, peuvent remettre en cause leur choix, s'ils peuvent déterminer une plage horaire de charge qui leur permettrait de payer moins cher le service de recharge. Ainsi, de manière itérative, les automates vont fournir leur choix mis à jour de profil de charge au gestionnaire 30, qui va effectuer la « somme » de ces choix individuels mis à jour afin de générer le profil de consommation électrique globale envisagée sur ledit réseau local en résultant, qui sera envoyé à l'ensemble des automates conçus pour déterminer une plage horaire de charge optimale en fonction de ce signal reçu.

L'utilisation du signal de consommation électrique généré par le gestionnaire 30 indiquant le profil de consommation électrique globale envisagée sur le réseau lors de l'étape de coordination de charge permet donc de mettre en oeuvre un processus de prise de décision dynamique des usagers, via les automates liés aux batteries, dont le point central est que le choix individuel d'un profil de charge pour une batterie en particulier dépend, indirectement, des choix individuels qui sont effectués pour l'ensemble des autres batteries rattachées au même réseau local de distribution d'énergie électrique, compte tenu de la nature du signal de consommation électrique reçu, sur lequel se base la prise de décision des automates.

L'envoi des choix individuels de profil de charge des automates au gestionnaire 30 peut être synchrone ou asynchrone. Plus précisément, le cas « synchrone » correspond au cas où le gestionnaire 30 ne renvoie pas le signal indiquant le profil de consommation électrique globale à chaque nouveau choix que lui transmet un automate de batterie, mais selon un pas de temps fixé. Dans ce cas, au moment où un automate effectue une mise à jour de son choix de profil de charge, certains autres automates sont susceptibles d'avoir déjà mis à jour leur choix de profil de charge depuis le moment où le dernier signal indiquant le profil de consommation électrique globale a été transmis par le gestionnaire à l'ensemble des automates de batteries. Ainsi, entre deux envois de signaux par le gestionnaire, le mécanisme de coordination fonctionne alors comme si les automates envoyaient simultanément leurs choix de profil de charge, de façon « synchrone ».

Le cas « asynchrone » correspond au cas où le gestionnaire renvoie un signal de consommation électrique à tous les automates dès réception d'un nouveau choix de profil de charge par un automate. Les automates effectuent alors la mise à jour des profils de charge successivement, en prenant en compte le signal de consommation électrique globale qui intègre l'ensemble des choix des autres automates déjà réalisés au moment de la prise de décision. Chaque automate a alors accès à l'ensemble de l'information sur les choix des autres automates au moment de la mise à jour de son choix ce qui permet de considérer que ces choix sont successifs, autrement dit « asynchrones ». Ce deuxième cas implique naturellement des échanges d'information plus fréquents.

En particulier, la détermination de la plage horaire de charge optimale dans le cadre de la mise à jour itérative des choix individuels de profil de charge, peut être mise en oeuvre de la manière suivante. Notons T l'horizon temporel sur lequel le mécanisme de coordination est mis en place (par exemple pour la charge nocturne, t=0 à 17h et t=T à 7h le lendemain).

Si l'usager de la batterie i charge la batterie selon un profil :

$$n_{VE\,i} = (n_{VE\,i}(t))_{t=0,1\dots,T}$$

qui lui assure son besoin de charge Ci, ce qui s'écrit mathématiquement :

$$\sum_{t=\alpha_i}^{\beta_i} n_{VE\,i}(t) = C_i$$

avec :

$C_i$ le temps de charge nécessaire pour la batterie i et $[\alpha_i;\beta_i]$ la plage sur laquelle la batterie i peut être rechargée, qui pourra par exemple correspondre à la période pendant laquelle la batterie i est connectée à sa borne de recharge, le coût perçu pour cette recharge est défini de la manière suivante :

$$Cout_{VE\,i}(n_{VE\,i},D) = \sum_{t=0}^{T} n_{VE\,i}(t)Cout(n_{VE\,i}(t),D(t))$$
$$= \sum_{t=0}^{T} n_{VE\,i}(t)Cout(n_{VE\,i}(t),D_{horsVE}(t) + P*n_{VE}(t))$$

avec :

Cout : une fonction qui contient les coûts propres à l'usage de la batterie (prix d'achat de l'électricité, éventuellement vieillissement de la batterie) et les coûts du réseau (pertes par effet Joule, vieillissement du transformateur par exemple), et les autres variables définies comme précédemment. Intuitivement, l'usager de la batterie i ne paie pour le service de charge que lorsque la batterie i est en train de charger (quand $n_{VE\,i}(t) = 1$).

Pour la batterie i, l'automate qui gouverne la charge de celle-ci est alors conçu pour déterminer le profil de charge $n_{VE\,i} = (n_{VE\,i}(t))_{t=0,1\dots,T}$ qui donne un coût minimal à l'usager. Ce choix dépend des stratégies de charge des autres batteries rattachées au même réseau local, concernant lesquelles l'information nécessaire au choix de profil de charge pour la batterie i est contenue dans le signal de consommation électrique $D(t)$ généré par le gestionnaire 30. En effet, à partir du profil de consommation électrique globale indiqué par ce signal et de son propre choix de profil de charge, l'automate associé à la batterie i peut reconstituer aisément les choix individuels de profil de charge agrégés de l'ensemble des autres batteries, en calculant $D(t) - P*n_{VE\,i}(t)$.

La détermination de la plage horaire de charge optimale pour l'automate associé à la batterie i consiste alors à choisir $n_{VE\,i}^{*}$ minimisant la fonction $Cout_{VE\,i}(n_{VE\,i},D)$ sous la contrainte de besoin de charge :

$$\sum_{t=\alpha_i}^{\beta_i} n_{VE\,i}(t) = C_i$$

A noter que l'invention présentée ici est aussi valable si la règle choix de l'automate associé à la batterie i n'est pas l'optimisation de sa fonction coût mais le choix d'une bonne solution, c'est-à-dire qui donne par exemple un coût inférieur à une valeur prédéfinie par les préférences de l'usager de la batterie i.

Ces choix vont être ainsi opérés de manière itérative par les automates associés aux différentes batteries, ce qui constitue un algorithme distribué de coordination de la charge des batteries 10 connectées au réseau local 20. Itérativement, chaque automate va fournir un choix de profil de charge selon lequel il souhaite charger, tenant compte du profil de consommation électrique globale, en résolvant le problème d'optimisation de la fonction coût exposé ci-dessus, ou encore en appliquant une autre règle de choix ne nécessitant que la connaissance du profil de consommation électrique globale envisagée au niveau du réseau local 20 et de son propre profil de charge $n_{VE\,i}(t)$.. A chaque remise à jour du choix du profil de charge prévu par un automate, ceci va faire évoluer la consommation globale et éventuellement inciter les autres automates à ajuster leur choix de profil de charge.

En pratique, pour que cette dynamique de coordination soit efficace, il faut qu'elle converge pour ne pas amener une remise à jour permanente des décisions des automates, ce qui voudrait dire que ceux-ci sont incapables d'accorder leurs choix et de se fixer des plages horaires de charge qui sont optimales pour toutes les batteries simultanément. Il faut également que cette convergence intervienne rapidement, puisque les signaux échangés entre les automates et le gestionnaire ont un coût. La rapidité de la convergence est avantageusement favorisée dans le cas où l'envoi des signaux des automates au gestionnaire 30 est synchrone.

Il faut enfin que le point vers lequel ce mécanisme converge soit efficace du point de vue du réseau local de distribution d'énergie électrique. Ceci est mesuré par :

$$Cout_{réseau} = \sum_{t=0}^{T} Cout_{réseau}(D_{horsVE}(t) + P * n_{VE}(t))$$

avec

T l'horizon temporel sur lequel le mécanisme de coordination est mis en place ;
$Cout_{réseau}$ la fonction qui contient les coûts côté réseau d'électricité, fortement dépendants de la charge des batteries (pertes Joule, vieillissement du transformateur) ;
et les autres variables définies comme précédemment.

La configuration vers laquelle ce processus de coordination converge dépend fortement des choix initiaux du gestionnaire 30 (en particulier, si celui-ci envoie le signal de consommation électrique apte à indiquer le profil de consommation électrique global avant le premier choix des automates des batteries) ou des automates des batteries (en particulier, si ceux-ci fournissent leur choix individuel de profil de charge initial en n'ayant pas connaissance du signal de consommation électrique généré par le gestionnaire). Aussi, on prévoit une étape d'apprentissage des points de départ les plus appropriés du processus de coordination, à la fois côté gestionnaire et côté automate de charge. Pour ce faire, côté gestionnaire 30, on prévoit de conserver un historique des signaux de consommation électrique initiaux transmis respectivement lors de chaque étape de coordination de charge et des gains en termes de coût de fonctionnement dudit réseau résultant de chaque étape de coordination de charge, ce qui permet avantageusement au gestionnaire 30 d'apprendre, à partir de cet historique, les signaux qui permettent de maximiser les gains côté réseau.

De la même manière, on prévoit de conserver, côté automate de gestion de charge associé à chaque batterie, un historique des choix individuels initiaux de profils de charge émis respectivement lors de chaque étape de coordination de charge et du coût de recharge résultant de chaque étape de coordination de charge, ce qui permet avantageusement à chaque automate d'apprendre, à partir de cet historique, les choix de profil de charge susceptibles de minimiser les coût.

Un moyen de déclenchement à distance de la charge des batteries peut avantageusement être mis en oeuvre, une fois que la phase de coordination de charge est terminée, c'est-à-dire une fois que la dynamique de coordination présentée ci-dessus converge en permettant de déterminer des profils de charge qui sont optimaux pour tous les usagers simultanément.

En variante, comme illustré en traits pointillés à la figure 2, partant de l'hypothèse que les automates ne connaissent pas leur fonction de coût Cout, notamment la partie associée aux impacts sur les équipements du réseau local d'électricité, le signal de consommation électrique généré à l'étape E2 par ledit gestionnaire ne se présente alors pas sous la forme du profil de consommation électrique globale envisagée sur le réseau local $D_{horsVE}(t) + P*n_{VE}(t)$, mais se présente à la place sous la forme d'un signal de prix propre à chaque usager, qui peut être directement calculé par le gestionnaire 30 à partir de la consommation électrique globale. Autrement dit, dans ce cas, les automates reçoivent seulement de la part du gestionnaire 30, un signal leur fournissant une évaluation du prix correspondant à la charge propre à leur batterie, concernant les coûts propres au réseau. Aussi, dans cette variante, à l'étape E4, les automates associés aux batteries 10 sont conçus pour remettre itérativement à jour leurs choix de profil de charge, non pas par optimisation ou par une règle de décision sur leur fonction $Cout_{VE\,i}(n_{VE\,i}, D)$ comme expliqué précédemment, mais par apprentissage des profils de charge peu coûteux en prenant en compte le signal de prix reçu, de sorte que chaque automate puisse affiner au fur et à mesure une évaluation de l'influence qu'a la charge de sa batterie sur le réseau.

Concernant les coûts de fonctionnement du réseau qui sont utilisés selon l'invention dans le processus de coordination distribuée de la charge d'un ensemble de batteries connectées à un même réseau local, c'est-à-dire se chargeant en aval d'un même transformateur, par exemple un transformateur moyenne tension/basse tension, tous les coûts dont l'évaluation repose sur le profil de consommation électrique globale envisagée sur le réseau local peuvent être intégrés. En particulier, les coûts établis sur la base d'une part, d'un modèle d'estimation des pertes Joule sur le réseau et, d'autre part, d'un modèle d'estimation du vieillissement du transformateur peuvent être considérés. Ainsi, le choix des automates repose dans ce cadre sur une combinaison des coûts d'achat de l'énergie électrique, des coûts d'utilisation de la batterie et de l'influence qu'aura la recharge de leur batterie associée sur les pertes Joule générées au niveau du réseau local et/ou sur le vieillissement du transformateur auquel ils sont rattachés.

Par exemple, la détermination de l'influence sur le vieillissement du transformateur peut être basée sur un calcul de la température du « point-chaud », qui est le point du transformateur à la plus haute température, situé dans le bobinage, et qui est la variable qui permet la meilleure estimation du vieillissement. En effet, à partir de la température du point-chaud du transformateur, il est possible de quantifier le vieillissement relatif du transformateur par rapport à une situation de référence associée à une température standard (98°C pour les spécifications CEI (Commission Electrotechnique Internationale)), en reprenant des formules données par la CEI ou IEEE (l'équivalent de la CEI aux Etats-Unis). Il est alors possible d'en déduire une valeur économique, en multipliant ce vieillissement relatif sur l'ensemble d'une période donnée par la valeur du transformateur pour la période en question. Avantageusement, cette formulation ne nécessite que la connaissance du profil de consommation électrique globale du réseau local, qui est le signal de consommation électrique défini comme étant central selon l'invention pour la mise en oeuvre d'une coordination efficace de la charge des batteries connectées au réseau.

**Revendications**

1.  Procédé de gestion de charge d'un ensemble de batteries de traction de véhicules électriques, dans lequel chaque batterie (10) dudit ensemble de batteries est prévue pour être chargée isolément, dans une étape de charge, au travers d'un même réseau local (20) de distribution d'énergie électrique auquel elle est connectée, ledit réseau local étant une partie de réseau de distribution d'énergie électrique déployée en aval d'un même transformateur local (200), **caractérisé en ce qu'**il comprend une étape de coordination de la charge dudit ensemble de batteries dans laquelle on fournit un automate de gestion de charge de batterie associé à chaque batterie (10) dudit ensemble, apte à établir une communication bidirectionnelle avec un gestionnaire de batteries (30) implémenté au niveau dudit réseau local (20) de distribution d'énergie électrique, ledit gestionnaire de batteries (30) étant connecté audit réseau local en aval dudit transformateur (200), et dans laquelle, avant le début effectif de ladite étape de charge, on détermine, pour chaque batterie (10) à charger, à l'aide dudit automate de gestion de charge associé à ladite batterie, un profil de charge optimal, en tenant compte d'un signal de consommation électrique fourni audit automate par ledit gestionnaire (30), apte à indiquer un profil de consommation électrique globale envisagée sur ledit réseau local (20) résultant de choix individuels de profil de charge propres à chaque batterie émis itérativement par chaque automate respectif à destination dudit gestionnaire.

2.  Procédé selon la revendication 1, **caractérisé en ce que**, côté dudit gestionnaire (30), on reçoit lesdits choix individuels de profil de charge propres à chaque batterie via ledit automate de gestion de charge de batterie associé à chaque batterie, on effectue une agrégation (E2) desdits choix individuels de profils de charge reçus, de manière à générer ledit profil de consommation électrique globale envisagée sur ledit réseau local (20), considéré sur un intervalle temporel englobant lesdits choix individuels de profils de charge, et on transmet (E3) ledit signal de consommation électrique indiquant ledit profil de consommation électrique globale envisagée sur ledit réseau local (20) à chacun desdits automates de gestion de charge de batterie.

3.  Procédé selon l'une quelconque des revendications 1 ou 2, **caractérisé en ce que**, côté automate de gestion de charge associé à chaque batterie, ladite étape de coordination comprend dans l'ordre les sous-étapes suivantes :

    a) on détermine (E0) pour chaque batterie (10) à charger, à l'aide de l'automate de gestion de charge associé à ladite batterie, un choix individuel de profil de charge de ladite batterie (10),
    b) on transmet (E1) depuis chaque automate, lesdits choix individuels de profils de charge ainsi déterminés vers ledit gestionnaire (30),
    c) on reçoit (E3), au niveau de chaque automate, ledit profil de consommation électrique globale envisagée sur ledit réseau local (20), généré par ledit gestionnaire (30),
    d) on revient de manière itérative à la sous-étape a) pour mettre à jour (E4) ledit choix individuel de profil de charge en tenant compte dudit profil de consommation électrique globale reçu, jusqu'à ce qu'on détermine ledit profil de charge optimal pour toutes les batteries à charger, simultanément.

4.  Procédé selon la revendication 3, **caractérisé en ce que** ledit choix individuel de profil de charge comprend au moins une plage horaire de charge souhaitée et **en ce qu'**à l'étape d), ladite mise à jour consiste à décaler ladite plage horaire de charge souhaitée pour obtenir une plage horaire de charge optimale, qui minimise une fonction de coût appliquée audit profil de consommation électrique globale envisagée.

**5.** Procédé selon la revendication 4, **caractérisé en ce que** ladite fonction de coût repose sur une combinaison de tarifs d'achat de l'énergie électrique, de coûts liés à l'utilisation de la batterie et de coûts de fonctionnement dudit réseau local découlant de la charge des batteries.

**6.** Procédé selon la revendication 5, **caractérisé en ce que** les coûts de fonctionnement dudit réseau local sont établis sur la base d'une estimation des pertes Joule sur ledit réseau et d'un modèle d'estimation du vieillissement d'un même transformateur (200) dudit réseau local (20) auquel lesdites batteries (10) sont rattachées lors de l'étape de charge.

**7.** Procédé selon l'une quelconque des revendications 2 à 6, **caractérisé en ce qu'**on fournit audit gestionnaire (30) un profil de consommation électrique sur ledit réseau local hors charge desdites batteries, considéré sur ledit intervalle temporel, afin d'établir ledit profil de consommation électrique globale envisagée sur ledit réseau local (20) de distribution d'énergie électrique en effectuant une sommation dudit profil de consommation électrique hors charge et de ladite agrégation desdits choix individuels de profil de charge.

**8.** Procédé selon la revendication 3, **caractérisé en ce que** ledit signal de consommation électrique généré par ledit gestionnaire comprend une évaluation du prix correspondant à la charge propre à chaque batterie (10) à charger calculée sur la base dudit profil de consommation électrique globale envisagée sur ledit réseau local et **en ce qu'**à l'étape d), ladite mise à jour consiste à procéder à la détermination dudit profil de charge optimal par apprentissage en fonction de ladite évaluation de prix reçue.

**9.** Procédé selon l'une quelconque des revendications précédentes, **caractérisé en ce que** ledit signal de consommation électrique est transmis par ledit gestionnaire (30) à destination desdits automates selon un pas de temps fixé.

**10.** Procédé selon l'une quelconque des revendications 1 à 8, **caractérisé en ce que** ledit signal de consommation électrique est transmis par ledit gestionnaire (30) à destination desdits automates dès réception par ledit gestionnaire (30) d'un nouveau choix individuel de profil de charge par un automate.

**11.** Procédé selon l'une quelconque des revendications précédentes, **caractérisé en ce que** ledit choix individuel de profil de charge pour une batterie (10) est déterminé à l'aide de l'automate de gestion de charge associé à ladite batterie (10), sur la base de contraintes de charge spécifiées par un usager de ladite batterie, incluant au moins un instant de début d'utilisation souhaité de ladite batterie (10) et un état de charge souhaité de ladite batterie audit instant de début d'utilisation.

**12.** Procédé selon l'une quelconque des revendications précédentes, **caractérisé en ce que** ledit choix individuel de profil de charge pour une batterie (10) est déterminé à l'aide de l'automate de gestion de charge associé à ladite batterie (10) en tenant compte à la fois d'un prix d'achat de l'énergie électrique, de coûts liés à l'utilisation de la batterie et de signaux d'incitation tarifaires fournis par un organe de gestion dudit réseau local de distribution d'énergie électrique.

**13.** Procédé selon l'une quelconque des revendications précédentes, **caractérisé en ce qu'**on contrôle à distance l'activation de ladite étape de charge suivant ledit profil de charge optimal préalablement déterminé au cours de ladite étape de coordination de charge.

**14.** Procédé selon l'une quelconque des revendications précédentes, **caractérisé en ce que** ladite communication bidirectionnelle est établie par l'intermédiaire d'une liaison utilisant ledit réseau de distribution d'énergie électrique ou un réseau de communication filaire associé ou non audit réseau.

**15.** Procédé selon l'une quelconque des revendications 1 à 13, **caractérisé en ce que** ladite communication bidirectionnelle est établie par une liaison sans fil.

**16.** Procédé selon l'une quelconque des revendications précédentes, **caractérisé en ce qu'**on conserve, côté gestionnaire (30), un historique des signaux de consommation électrique initiaux transmis respectivement lors de chaque étape de coordination de charge et des gains de coût de fonctionnement dudit réseau obtenus au terme de chaque étape de coordination de charge, de manière que ledit gestionnaire détermine par apprentissage à partir dudit historique le signal de consommation électrique initial propre à maximiser lesdits gains.

**17.** Procédé selon l'une quelconque des revendications précédentes, **caractérisé en ce qu'**on conserve, côté automate de gestion de charge associé à chaque batterie, un historique des choix individuels initiaux de profils de charge émis respectivement lors de chaque étape de coordination de charge et du coût lié à la charge résultant de chaque étape de coordination de charge, de manière que chaque automate détermine par apprentissage à partir dudit historique le choix individuel de profil de charge initial propre à minimiser ledit coût.

**Patentansprüche**

1. Verfahren zur Verwaltung des Ladevorgangs einer Anordnung von Traktionsbatterien von Elektrofahrzeugen, wobei jede Batterie (10) der Batterieanordnung vorgesehen ist, in einem Ladeschritt mittels eines selben lokalen Stromverteilernetzes (20), an das sie angeschlossen ist, einzeln geladen zu werden, wobei das lokale Netz ein Teil eines Stromverteilernetzes nach einem selben lokalen Transformator (200) ist, **dadurch gekennzeichnet, dass** es einen Koordinierungsschritt des Ladevorgangs der Batterieanordnung umfasst, bei dem ein jeder Batterie (10) der Anordnung zugeordneter Automat zur Verwaltung des Batterieladevorgangs bereitgestellt wird, der imstande ist, eine zweidirektionale Kommunikation mit einer Batterieverwaltung (30) herzustellen, die auf Ebene des lokalen Stromverteilernetzes (20) implementiert ist, wobei die Batterieverwaltung (30) mit dem lokalen Netz nach dem Transformator (200) verbunden ist, und bei dem vor dem tatsächlichen Beginn des Ladeschritts für jede zu ladende Batterie (10) mit Hilfe des der Batterie zugeordneten Automaten zur Verwaltung des Ladevorgangs ein optimales Ladeprofil unter Berücksichtigung eines Stromverbrauchsignals bestimmt wird, das dem Automaten von der Verwaltung (30) bereitgestellt wird, das imstande ist, ein in dem lokalen Netz (20) beobachtetes globales Stromverbrauchsprofil anzuzeigen, das aus der individuellen Ladeprofilauswahl jeder Batterie resultiert, die iterativ von jedem jeweiligen Automaten an die Verwaltung gesendet wird.

2. Verfahren nach Anspruch 1, **dadurch gekennzeichnet, dass** auf Ebene der Verwaltung (30) der Empfang der individuellen Ladeprofilauswahl jeder Batterie über den jeder Batterie zugeordneten Automaten zur Verwaltung des Batterieladevorgangs stattfindet, eine Aggregation (E2) der empfangenen individuellen Ladeprofilauswahl derart erfolgt, dass das in dem lokalen Netz (20) beobachtete globale Stromverbrauchsprofil, betrachtet über ein Zeitintervall, das die individuelle Ladeprofilauswahl einschließt, erfolgt und das Stromverbrauchsignal, welches das in dem lokalen Netz (20) beobachtete globale Stromverbrauchsprofil an jeden der Automaten zur Verwaltung des Batterieladevorgangs angibt, übermittelt (E3) wird.

3. Verfahren nach einem der Ansprüche 1 oder 2, **dadurch gekennzeichnet, dass** auf Ebene des jeder Batterie zugeordneten Automaten zur Verwaltung des Ladevorgangs der Koordinierungsschritt in der Reihenfolge der folgenden Unterschritte umfasst:

   a) Bestimmen (E0), für jede zu ladende Batterie (10), mit Hilfe des jeder Batterie zugeordneten Automaten zur Verwaltung des Ladevorgangs, eines individuellen Ladeprofils der Batterie (10),
   b) Übermitteln (E1), von jedem Automaten, der derart bestimmten individuellen Ladeprofilauswahl an die Verwaltung (30),
   c) Empfangen (E3), auf Ebene jedes Automaten, des in dem lokalen Netz (20) beobachteten, von der Verwaltung (30) erzeugten globalen Stromverbrauchsprofils,
   d) iterative Rückkehr zum Unterschritt a) zwecks Aktualisierung (E4) der individuellen Ladeprofilauswahl unter Berücksichtigung des empfangenen globalen Stromverbrauchsprofils bis zur Bestimmung des optimalen Ladeprofils für alle zu ladenden Batterien gleichzeitig.

4. Verfahren nach Anspruch 3, **dadurch gekennzeichnet, dass** die individuelle Ladeprofilauswahl mindestens einen gewünschten Ladezeitraum umfasst und dass in Schritt d) die Aktualisierung darin besteht, den gewünschten Ladezeitraum zu verschieben, um einen optimalen Ladezeitraum zu erhalten, was eine Minimierung einer Kostenfunktion, angewendet auf das global beobachtete Stromverbrauchsprofil, bewirkt.

5. Verfahren nach Anspruch 4, **dadurch gekennzeichnet, dass** die Kostenfunktion auf einer Kombination von Stromeinkaufstarifen, von Batterienutzungskosten und von Betriebskosten des lokalen Netzes, die sich aus dem Ladevorgang der Batterien ergeben, beruht.

6. Verfahren nach Anspruch 5, **dadurch gekennzeichnet, dass** die Betriebskosten des lokalen Netzes auf der Basis einer Bewertung der Jouleverluste im Netz und eines Bewertungsmodells der Alterung desselben Transformators (200) des lokalen Netzes (20) ermittelt werden, mit dem die Batterien (10) beim Ladeschritt verbunden sind.

7. Verfahren nach einem der Ansprüche 2 bis 6, **dadurch gekennzeichnet, dass** der Verwaltung (30) über das lokale Netz ohne Laden der Batterien ein Stromverbrauchsprofil für das Zeitintervall bereitgestellt wird, um das in dem lokalen Stromverteilernetz (20) beobachtete globale Stromverbrauchsprofil durch Summierung des Stromverbrauchsprofils außerhalb des Ladevorgangs und Aggregation der individuellen Ladeprofilauswahl zu ermitteln.

8. Verfahren nach Anspruch 3, **dadurch gekennzeichnet, dass** das von der Verwaltung erzeugte Stromverbrauchsignal eine Evaluierung des Preises umfasst, der dem eigentlichen Ladevorgang jeder zu ladenden Batterie (10) entspricht, berechnet auf der Basis des in dem lokalen Netz beobachteten Profils des globalen Stromverbrauchs, und dass in Schritt d) die Aktualisierung darin besteht, die Bestimmung des optimalen Ladeprofils in Abhängigkeit von der erhaltenen Preisevaluierung zu erlernen.

9. Verfahren nach einem der vorangehenden Ansprüche, **dadurch gekennzeichnet, dass** das Stromverbrauchsignal von der Verwaltung (30) in einem festgelegten Zeitabschnitt an die Automaten übertragen wird.

10. Verfahren nach einem der Ansprüche 1 bis 8, **dadurch gekennzeichnet, dass** das Stromverbrauchsignal von der Verwaltung (30) an die Automaten ab Empfang durch die Verwaltung (30) einer neuen individuellen Ladeprofilauswahl durch einen Automaten übermittelt wird.

11. Verfahren nach einem der vorangehenden Ansprüche, **dadurch gekennzeichnet, dass** die individuelle Ladeprofilauswahl für eine Batterie (10) mit Hilfe des der Batterie (10) zugeordneten Automaten zur Verwaltung des Ladevorgangs auf der Basis von einem Benutzer der Batterie spezifizierten Ladezwängen bestimmt wird, die mindestens einen Zeitpunkt des Beginns der gewünschten Nutzung der Batterie (10) und einen zum Zeitpunkt des Beginns der Nutzung gewünschten Ladezustand einschließen.

12. Verfahren nach einem der vorangehenden Ansprüche, **dadurch gekennzeichnet, dass** die individuelle Ladeprofilauswahl für eine Batterie (10) mit Hilfe des der Batterie (10) zugeordneten Automaten zur Verwaltung des Ladevorgangs unter Berücksichtigung sowohl eines Strompreiskaufpreises, von Kosten im Zusammenhang mit der Nutzung der Batterie und von Tarifanreizsignalen bestimmt wird, die von einem Verwaltungsorgan des lokalen Stromverteilungsnetzes bereitgestellt werden.

13. Verfahren nach einem der vorangehenden Ansprüche, **dadurch gekennzeichnet, dass** die Aktivierung des Ladeschritts gemäß dem beim Koordinierungsschritt des Ladevorgangs zuvor bestimmten optimalen Ladeprofil ferngesteuert wird.

14. Verfahren nach einem der vorangehenden Ansprüche, **dadurch gekennzeichnet, dass** die zweidirektionale Kommunikation mit Hilfe einer Verbindung durchgeführt wird, die das Stromverteilungsnetz oder ein dem Netz zugeordnetes oder nicht zugeordnetes drahtgebundenes Kommunikationsnetz nutzt.

15. Verfahren nach einem der Ansprüche 1 bis 13, **dadurch gekennzeichnet, dass** die zweidirektionale Kommunikation mittels einer drahtlosen Verbindung durchgeführt wird.

16. Verfahren nach einem der vorangehenden Ansprüche, **dadurch gekennzeichnet, dass** auf Ebene der Verwaltung (30) ein Verlauf der ursprünglichen Stromverbrauchssignale, die jeweils bei jedem Koordinierungsschritt des Ladevorgangs übertragen werden, und der erzielten Einsparungen von Betriebskosten des Netzes am Ende jedes Koordinierungsschritt des Ladevorgangs gespeichert wird, so dass die Verwaltung ausgehend von dem Verlauf lernt, das ursprüngliche Stromverbrauchsignal zu bestimmen, mit dem die Einsparungen maximiert werden können.

17. Verfahren nach einem der vorangehenden Ansprüche, **dadurch gekennzeichnet, dass** auf Ebene des jeder Batterie zugeordneten Automaten zur Verwaltung des Ladevorgangs ein Verlauf der ursprünglichen individuellen Ladeprofilauswahl, die jeweils bei jedem Koordinierungsschritt des Ladevorgangs ausgegeben wird, und der mit dem Ladevorgang verbundenen Kosten, die sich aus jedem Koordinierungsschritt des Ladevorgangs ergeben, gespeichert wird, so dass jeder Automat ausgehend vom Verlauf lernt, welche ursprüngliche individuelle Ladeprofilauswahl imstande ist, die Kosten zu minimieren.

**Claims**

1. A method for managing the charging of a set of electric vehicle traction batteries, wherein each battery (10) of said set of batteries is provided for being charged in isolation in a charging step through a same local electric power distribution network (20) to which it is connected, said local network being part of an electric power distribution network deployed downstream from a same local transformer (200), **characterized in that** it comprises a charging coordination step of said set of batteries wherein a battery charge management automaton associated with each battery (10) of said set is provided, able to establish a bidirectional communication with a battery manager (30) implemented at said local electric power distribution network (20), said battery manager (30) being connected to said local network downstream from said transformer (200), and wherein, before the actual start of said charging step, an optimum charging profile is determined for each battery (10) to be charged using said charge management automaton associated with said battery, taking into account an electric consumption signal provided to said automaton by said manager (30), able to indicate an overall electric consumption profile contemplated over said local network (20) resulting from individual choices of charging profile specific to each battery iteratively emitted by each respective automaton destined for said manager.

2. The method according to claim 1, **characterized in that** on the side of said manager (30), said individual choices of charging profiles specific to each battery are received via said battery charge management automaton associated with each battery, an aggregation (E2) of said individual choices of received charging profiles is made, so as to generate said overall electric consumption profile contemplated over said local network (20), considered over a time interval encompassing said individual choices of charging profiles and said electric consumption signal indicating said overall electric consumption profile contemplated over said local network (20) is transmitted (E3) to each of said battery charge management automata.

3. The method according to any one of claims 1 or 2, **characterized in that**, on the side of the charge management automaton associated with each battery, said coordination step comprises in the order, the following sub-steps of:

> a) determining (E0) for each battery (10) to be charged, using the charge management automaton associated with said battery, an individual choice of charging profile of said battery (10),
> b) transmitting (E1) from each automaton, said thereby determined individual choices of charging profiles toward said manager (30),
> c) receiving (E3), at each automaton, said overall electric consumption profile contemplated over said local network (20), generated by said manager (30),
> d) one returns iteratively to sub-step a) for updating (E4), said individual choice of charging profile taking into account said received overall electric consumption profile until said optimum charging profile is determined for all the batteries to be charged, simultaneously.

4. The method according to claim 3, **characterized in that** said individual choice of charging profile comprises at least one desired charging time range and **in that** in step d), said updating consists of shifting said desired charging time range in order to obtain an optimum charging time range, which minimizes a cost function applied to said contemplated overall electric consumption profile.

5. The method according to claim 4, **characterized in that** said cost function is based on a combination of electric power purchase rates; of costs related to the use of the battery and of operational costs of said local network resulting from the charging of the batteries.

6. The method according to claim 5, **characterized in that** the operational costs of said local network are established on the basis of an estimate of the Joule losses on said network and on a model for estimating aging of a same transformer (200) of said local network (20) to which said batteries (10) are connected during the charging step.

7. The method according to any one of claims 2 to 6, **characterized in that** an electric consumption profile is provided to said manager (30) on said local network without charging said batteries, considered over said time interval, to establish said overall electric consumption profile contemplated over said local electric power distribution network (20) by carrying out a summation of said electric consumption profile without charging and of said aggregation of said individual choices of charging profile.

8. The method according to claim 3, **characterized in that** said electric consumption signal generated by said manager comprises a price evaluation corresponding to the specific charge of each battery (10) to be charged calculated on the basis of said overall electric consumption profile contemplated over said local network, and **in that** in step d) said updating consists of proceeding with the determination of said optimum charging profile by learning according to said received price evaluation.

9. The method according to any one of the preceding claims, **characterized in that** said electric consumption signal is transmitted by said manager (30) destined for said automata according to a set time step.

10. The method according to any one of claims 1 to 8, **characterized in that** said electric consumption signal is transmitted by said manager (30) destined for said automata upon receiving by said manager (30) of a new individual choice of charging profile by an automaton.

11. The method according to any one of the preceding claims, **characterized in that** said individual choice of charging profile for a battery (10) is determined using the charging management automaton associated with said battery (10), on the basis of charging constraints specified by a user of said battery, including at least one desired instant for beginning the use of said battery (10) and a desired state of charge of said battery at said instant for beginning the use.

12. The method according to any one of the preceding claims, **characterized in that** said individual choice of charging profile for a battery (10) is determined using the charging management automaton associated with said battery (10) by taking both into account a purchase price of electrical power, costs related to the use of the battery and price incentive signals provided by a management authority for said local electric power distribution network.

13. The method according to any one of the preceding claims, **characterized in that** activation of said charging step is remotely controlled according to said optimum charging profile determined beforehand during said charging coordination step.

14. The method according to any one of the preceding claims, **characterized in that** said bidirectional communication is established via a link using said electric power distribution network or a wired communication network either associated or not with said network.

15. The method according to any one of claims 1 to 13, **characterized in that** said bidirectional communication is established through a wireless link.

16. The method according to any one of the preceding claims, **characterized in that** on the manager (30) side, a history of the initial electric consumption signals respectively transmitted during each charging coordination step and operational cost gains of said network obtained at the end of each charging coordination step is kept so that said manager determines by learning from said history the initial electric consumption signal able to maximize said gains.

17. The method according to any one of the preceding claims, **characterized in that** on the charging management automaton side associated with each battery, a history of the initial individual choices of charging profiles respectively emitted during each charging coordination step and cost related to the charge resulting from each charging coordination step is kept, so that each automaton determines by learning from said history the individual choice of initial charging profile able to minimize said cost.

## Fig.1

E4 — Mise à jour de la plage de charge souhaitée

E2 — Agrégation des consommations électriques prévues au niveau du quartier

200

30

20kV / 400V

10

20

10

E0 — Détermination profil de charge

E3 — Profil de consommation agrégé

Envoi de la plage de charge

10

E1

## Fig.2

Envoi des consos prévues

Consommations électriques "classiques"

Estimation sur la base d'un historique

E2 — Sommation des consos envisagées VE + consos hors VE

*Profil global de conso électrique du quartier (identique à tous les usagers)*

$D_{horsVE} + P*n_{VE}$

E3

Sommation consos envisagées VE + consos hors VE Estimation des impacts sur le réseau électrique

*Signal prix propre à chaque usager*

E4 — Batterie VE (automate) Choix du profil de charge souhaité, en fonction du signal reçu, par optimisation

Batterie VE (automate) Choix par apprentissage du profil de charge souhaité en fonction du prix reçu

*Profil de charge* $t*_i, C_i$

**EP 2 928 721 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2010033038 A
- WO 2010132490 A
- US 2008052145 A